# FASCICULE DE BREVET EUROPEEN

(11) **EP 2 939 002 B1**
(45) Date de publication et mention de la délivrance du brevet: **15.03.2017**
(21) Numéro de dépôt: 13820818.6
(22) Date de dépôt: 17.12.2013
(51) Int. Cl.: G01N 21/17

(54) **PROCEDE ET DISPOSITIF POUR CARACTERISER UN MILIEU FLUIDE A L'AIDE D'UN TRANSDUCTEUR PHOTOELECTRIQUE**
VERFAHREN UND VORRICHTUNG ZUR CHARAKTERISIERUNG EINES FLUIDEN MITTELS EINES PHOTOELEKTRISCHEN WANDLERS
METHOD AND DEVICE FOR CHARACTERISING A FLUID MEDIUM USING A PHOTOELECTRIC TRANSDUCER

(30) Priorité: 27.12.2012 FR 1262884
(43) Date de publication de la demande: 04.11.2015
(73) Titulaire: Centre National de la Recherche Scientifique (C.N.R.S.), 75794 Paris Cedex 16 (FR); Ecole Centrale De Lyon, 69134 Ecully Cedex (FR); Institut National des Sciences Appliquées de Lyon, 69621 Villeurbanne Cedex (FR); Université Claude Bernard Lyon I, 69622 Villeurbanne Cedex (FR); Universite T. Chevtchenko de Kiev, Kiev 01601 (UA)
(72) Inventeur: LYTVYNENKO, Sergeii, Kiev 01601 (UA); BEILOBROV, Dmytro, Kiev 01601 (UA); LYSENKO, Volodymyr, F-69621 Villeurbanne (FR); SKRYSHEVSKYY, Valeriy, Kiev 01601 (UA)
(74) Mandataire: Thibault, Jean-Marc
(86) Numéro de dépôt international: PCT/FR2013/053139
(87) Numéro de publication internationale: WO 2014/102485

(56) Documents cités:
- JP-A- 2004 177 384
- JP-A- 2005 024 286
- US-A- 4 836 012
- US-A- 5 369 495
- US-A1- 2006 042 354
- WAGNER T ET AL: "A high-density multi-point LAPS set-up using a VCSEL array and FPGA control", PROCEDIA CHEMISTRY, ELSEVIER, AMSTERDAM, NL, vol. 1, no. 1, 1 septembre 2009 (2009-09-01), pages 1483-1486, XP026799837, ISSN: 1876-6196 [extrait le 2009-09-01] cité dans la demande

## Description

La présente invention concerne le domaine technique de la reconnaissance ou de la caractérisation d'un milieu fluide au sens général, à l'aide d'un transducteur photoélectrique.

L'identification de milieux fluides et/ou de produits ou substances contenus dans des milieux fluides trouvent de nombreuses applications comme par exemple dans la détection de produits ou substances dans un milieu fluide, le contrôle de qualité ou le contrôle de conformité, etc.

Dans l'état de la technique, il est connu par la publication « A high-density multi-point LAPS set-up using a VCSEL array and FPGA control », Sensors and Actuators B154 (2011) 124-128, un capteur désigné par l'acronyme L.A.P.S. (pour Light-Adressable Potentiometric Sensor) dont la structure comporte un transducteur potentiométrique en contact avec le liquide à analyser et séparé d'un élément semi-conducteur par un isolant. Une source de lumière modulée est utilisée pour créer une excitation photonique localisée qui pénètre directement à l'intérieur de l'élément semi-conducteur pour générer des paires d'électrons-trous à l'intérieur dudit élément. L'application d'une tension de polarisation aux bornes du capteur conduit à la génération d'un photocourant. La valeur du photocourant dépend en particulier de la tension de polarisation, de l'excitation photonique et du potentiel à l'interface liquide/isolant.

Il ressort du principe même de ce capteur que le signal de photocourant est de nature photocapacitive en raison de l'interface isolant/semi-conducteur. Il s'ensuit que la sensibilité d'un tel capteur est faible et que le signal détecté est de faible puissance. Par ailleurs, il apparait que les zones non éclairées influencent le signal crée par les zones localisées éclairées.

Dans l'état de la technique, il est également connu par la publication « Chemical Sensors for Electronic Nose Systems », Microchim. Acta 1.49, 1-17 (2005), un système de nez électronique mettant en oeuvre un capteur chimique pour permettre l'analyse de composés organiques volatiles. Un tel système comporte un transistor à effet de champ MOSFET correspondant à l'acronyme (Metal Oxide Semiconductor Field Effect Transistor). La grille du transistor est en contact avec le gaz à analyser qui est séparé de la jonction drain-source par un isolant. Les charges sur l'isolant influencent par un effet de champ, le courant drain-source et par suite le photocourant recueilli aux bornes du transistor permettant ainsi de caractériser le gaz à analyser.

Il ressort du principe même de ce nez électronique que le signal de courant entre le drain et la source est modulé par effet de champ via l'interface isolant/fluide. Un inconvénient de ce nez électronique concerne la nécessité de disposer d'une grille spécifique pour assurer une caractérisation sélective des gaz. A cet égard, pour être sensible aux composés neutres, par exemple, des catalyseurs spécifiques doivent être utilisées afin de décomposer les molécules neutres en éléments chargés. Un autre inconvénient de ce nez électronique (du point de vue de sa réalisation technologique) concerne la nécessité d'isoler électriquement le drain et la source de chaque transistor du fluide à analyser. La résolution spatiale de ce dispositif est définie et limitée par la taille de chaque transistor.

Il est également connu par le document US 2006/0042354, un système de détection de l'hydrogène comportant un substrat semi-conducteur pourvu d'un côté d'un empilement de couches comportant une couche d'isolation électrique, une couche conductrice d'ions et une première électrode conductrice. L'autre côté du substrat semi-conducteur est pourvu d'une deuxième électrode conductrice. Le substrat semi-conducteur est soumis à un faisceau laser pulsé, et le photo-courant créé est mesuré, permettant de déterminer la concentration d'hydrogène. Le photocourant créé possède une nature capacitive à cause de la présence d'une couche d'isolation électrique recouvrant la totalité du substrat semi-conducteur. L'éclairage est réalisé sur le côté opposé de l'interface substrat / hydrogène, de sorte qu'une seule valeur est mesurée pour l'interface créée. Un tel système de détection ne permet pas d'identifier un gaz donné d'un mélange gazeux quelconque.

La présente invention vise à remédier aux inconvénients de l'art antérieur en proposant une nouvelle méthode pour caractériser à l'aide d'un transducteur photoélectrique, un milieu fluide c'est-à-dire un liquide et/ou un gaz et/ou des produits ou substances contenus dans des milieux fluides, de nature électriquement neutre ou non, cette méthode de caractérisation présentant une sensibilité élevée et une résolution spatiale adaptable facilement.

Pour atteindre un tel objectif, l'objet de l'invention propose un procédé pour caractériser un milieu fluide à l'aide d'un transducteur photoélectrique comportant au moins un substrat semi-conducteur possédant au moins une zone de charge d'espace.

Selon l'invention, le procédé comporte les étapes suivantes :
- réaliser une surface de réception pour le milieu fluide sur au moins une face du transducteur photoélectrique,
- mettre le milieu fluide à caractériser en contact avec la surface de réception, afin de réaliser une interface substrat/milieu fluide,
- éclairer à travers le milieu fluide, successivement dans le temps, plusieurs zones de l'interface à l'aide d'un faisceau de lumière modulé en amplitude pour créer des charges électriques photogénérées,
- récupérer pour chaque zone de l'interface éclairée, les valeurs d'au moins une grandeur photoélectrique dont la valeur est dépendante des conditions d'éclairage et des propriétés électroniques de l'interface substrat/milieu fluide,
- créer au moins une matrice mono ou bidimensionnelle des valeurs de la grandeur photoélectrique récupérée,
- à partir de la matrice des valeurs de la grandeur photoélectrique créée, déterminer une signature électronique caractéristique du milieu fluide.

De plus, le procédé selon l'invention peut présenter en outre en combinaison au moins l'une et/ou l'autre des caractéristiques additionnelles suivantes :
- caractériser le milieu fluide à l'aide d'un transducteur photoélectrique dont le substrat semi-conducteur possède au moins une zone de charge d'espace spécialement créée dans le substrat semi-conducteur à partir d'une jonction de type diode :
   - en créant des charges électriques photogénérées qui se diffusent vers la jonction de type diode, lors de l'éclairement à travers le milieu fluide,
   - en récupérant les photocourants traversant la jonction de type diode et obtenus à partir des charges électriques photogénérées dont la quantité est déterminée par la vitesse de recombinaison à l'interface substrat/milieu fluide,
   - en créant une matrice des valeurs de photocourants récupérés,
   - en déterminant la signature électronique caractéristique du milieu fluide à partir de la matrice des photocourants créée,
- caractériser le milieu fluide à l'aide d'un transducteur photoélectrique dont le substrat semi-conducteur présente une zone de charge d'espace existant naturellement à la surface du semi-conducteur à l'interface substrat/ milieu fluide, le substrat étant équipé d'une première électrode en contact avec le milieu fluide et d'une deuxième électrode assurant le contact électrique sur la face du substrat opposée à l'interface,
   - en récupérant la phototension par des mesures capacitives réalisées à l'aide des premières et deuxièmes électrodes,
   - en créant une matrice des valeurs de phototensions récupérées,
   - en déterminant la signature électronique caractéristique du milieu fluide à partir de la matrice des phototensions créée,
- renouveler les étapes d'éclairage, de récupération de la grandeur photoélectrique, de création de la matrice et de détermination de la signature électronique, en modifiant l'un et/ou l'autre des paramètres suivants : temps d'application de l'éclairage, l'intensité de l'éclairage, la surface de l'éclairage, la longueur d'onde de l'éclairage, la température du milieu fluide et/ou du transducteur, de l'application d'une tension électrique complémentaire sur le transducteur,
- déterminer en tant que signature électronique caractéristique du milieu fluide, au moins une image visuelle des valeurs des grandeurs photoélectriques,
- découper le domaine de variation de la grandeur photoélectrique en plages à chacune desquelles une couleur est attribuée de manière que la signature électronique soit une image en couleurs,
- éclairer la zone de l'interface par un flux lumineux provenant soit d'un seul faisceau de lumière qui se déplace relativement de manière discrète ou continue par rapport au transducteur soit d'au moins une diode appartenant à un réseau de diodes commandées sélectivement en éclairage/extinction,
- réaliser une étape d'analyse de la signature électronique afin de reconnaître le milieu fluide et/ou l'un ou plusieurs de ses composants élémentaires,
- comparer la signature électronique du milieu fluide à au moins une signature électronique de référence déterminée pour un milieu fluide connu,
- utiliser des méthodes quantitatives de traitement des images obtenus,
- réaliser une étape de traitement sur la surface de réception préalablement à la réalisation de l'étape d'éclairage.

Un autre objectif de l'invention est de proposer un dispositif pour caractériser un milieu fluide à l'aide d'un transducteur photoélectrique.

Selon l'invention, le dispositif comporte :
- au moins un substrat semi-conducteur possédant au moins une zone de charge d'espace et présentant une surface de réception pour le milieu fluide en vue de constituer une interface substrat/milieu fluide,
- un système de production d'un faisceau ponctuel de lumière modulé en amplitude et éclairant, à travers le milieu fluide, au moins une zone de l'interface,
- un système de pilotage du faisceau ponctuel de lumière, de manière à éclairer successivement plusieurs zones de l'interface,
- un système de mesure des valeurs d'une grandeur photoélectrique délivrées lors de l'éclairage de chaque zone de l'interface afin de créer une matrice, mono ou bidimensionnelle, des valeurs de la grandeur photoélectrique et,
- un système de traitement des valeurs de la grandeur photoélectrique délivrées par le système de mesure, adapté pour déterminer, à partir de la matrice, une signature électronique caractéristique du milieu fluide.

De plus, le dispositif selon l'invention peut comporter en outre en combinaison au moins l'une et/ou l'autre des caractéristiques additionnelles suivante :
- le système de production d'un faisceau ponctuel de lumière comporte soit une source lumineuse ponctuelle associée éventuellement à un système de déplacement du système de production du faisceau ponctuel de lumière soit un réseau de diodes électroluminescentes pilotées chacune en allumage/ extinction,
- le système de mesure des valeurs de la grandeur photoélectrique comporte un circuit de récupération externe comportant :
   - soit une première électrode placée sur face du substrat semi-conducteur formant l'interface et une deuxième électrode placée sur la face opposée du substrat semi-conducteur,
   - soit une première électrode et une deuxième électrode placées sur la face du substrat semi-conducteur opposée de celle formant l'interface,
   - soit une première électrode optiquement transparente qui se trouve en contact avec le milieu fluide d'un côté et à l'opposé avec une plaque de protection optiquement transparente et une deuxième électrode placée sur la face du substrat semi-conducteur opposée de celle formant l'interface,
- le système de mesure comporte aussi une électrode optiquement transparente, en contact avec le milieu fluide et assurant l'application d'une tension entre la dite électrode et une électrode placée sur la face du substrat semi-conducteur opposée de celle formant l'interface de manière 3 créer des matrices de valeurs de photocourants pour différentes valeurs de la tension appliquée entre les électrodes,
- les électrodes de mesure aménagées sur la face du substrat semi-conducteur opposée de celle formant l'interface sont réalisées sous la forme de peignes entrecroisés,
- les mesures simultanées des valeurs de photocourant/phototension sont effectuées entre les électrodes afin de composer des matrices à plusieurs dimensions pour établir une signature électronique caractéristique du milieu fluide.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en coupe élévation montrant le principe général de l'invention.
Les **Figures 2A, 2B** et **2C** donnent des exemples d'images obtenues à partir de matrices des valeurs mesurées respectivement pour l'air, l'eau et l'alcool en tant que milieu fluide.
La **Figure 3** illustre un premier mode de réalisation du dispositif selon l'invention dans lequel une jonction p-n de type diode est spécialement créée dans le substrat semi-conducteur et la grandeur photoélectrique mesurée est, par exemple, un photocourant.
Les **Figures 3A****,** **3B, 3C** permettent d'illustrer le mécanisme d'apparition du photocourant selon le mode illustré à la **Fig. 3****.**
Les **Figures 4** et **4A** illustrent une variante de réalisation de ce premier mode de réalisation illustré à la **Fig. 3** mettant en oeuvre une couche de traitement chimique.
Les **Figures 5, 5A** et **5B** sont des vues respectivement de dessus, en coupe et de dessous illustrant une variante de réalisation de ce premier mode de réalisation dans laquelle les électrodes sont réalisées sur la face du substrat semi-conducteur opposée de celle recevant le milieu liquide.
Les **Figures 6** et **6A** sont des vues respectivement de dessus et en coupe illustrant une autre variante de réalisation du premier mode de réalisation dans laquelle le substrat semi-conducteur possède une jonction diode de type métal-semi-conducteur qui a été créée dans le substrat semi-conducteur.
La **Figure 7** illustre un exemple d'une variante de réalisation mettant en oeuvre une tension de polarisation du milieu fluide.
La **Figure 8** illustre un deuxième mode de réalisation du dispositif selon l'invention dans lequel est utilisée la zone de charge d'espace existant naturellement à la surface du semi-conducteur et la grandeur photoélectrique mesurée est, par exemple, une phototension.
Les **Figures 9A** à **9C** sont des images obtenues trois fois pour le même milieu fluide à savoir l'Iso-propanol, caractérisé selon le procédé conforme à l'invention.
Les **Figures 10A** à **10C** sont des images de trois échantillons différents de cognac, obtenues selon le procédé conforme à l'invention.
La **Figure 11** est un exemple de reconnaissance des liquides obtenus avec la méthode des composants principaux.

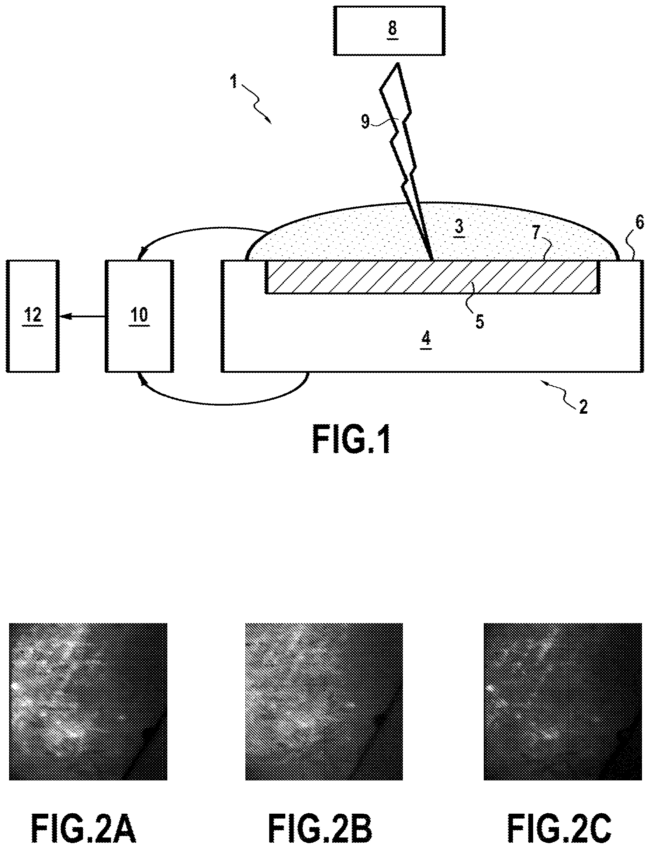

La **Fig. 1** illustre le principe d'un dispositif **1** conforme à l'invention adapté pour caractériser à l'aide d'un transducteur photoélectrique **2**, un milieu fluide **3** au sens général. Au sens de l'invention, un milieu fluide est un liquide, un gaz, un liquide gazeux, à caractère homogène ou hétérogène c'est-à-dire contenant des substances, des produits ou des composés divers comme par exemple, des objets biologiques (bactéries, cellules, virus, protéines, etc.) ou des particules à l'état solide qui peuvent être suspendus ou dissoutes dans des milieux liquides ou évaporés sous la forme d'un gaz. La caractérisation du milieu fluide s'entend ainsi de l'identification d'au moins un composé spécifique formant le milieu fluide ou contenu dans le milieu fluide. A titre d'exemples non limitatifs, il peut être utilisé en tant que milieu fluide, des produits agroalimentaires, des cosmétiques, des parfums, des produits biomédicaux, des hydrocarbures, des drogues, des substances explosives....

Le transducteur photoélectrique **2** comporte au moins un substrat semi-conducteur **4** possédant au moins une zone de charge d'espace **5** qui existe naturellement ou qui est créée spécialement. Le substrat semi-conducteur **4** présente une surface de réception **6** pour le milieu fluide **3** en vue de constituer une interface **7** substrat **4**/milieu fluide **3.** Le substrat semi-conducteur **4** est réalisé par exemple, par un substrat de silicium standard de qualité microélectronique et non traité spécialement. Par exemple, la surface de réception **6** du substrat semi-conducteur **4** est naturellement oxydée dans l'air.

Le dispositif **1** selon l'invention comporte également un système de production **8** d'un faisceau ponctuel de lumière **9** modulé en amplitude adapté pour éclairer, à travers le milieu fluide **3,** au moins une zone de l'interface **7.** Le système de production **8** est piloté pour éclairer une zone de l'interface **7,** pendant une durée déterminée. Le système de production **8** est adapté pour illuminer une ou plusieurs zones de l'interface **7** après avoir traversé le milieu fluide **3,** à l'aide d'un faisceau lumineux modulé en amplitude.

Le système de production **8** est réalisé de toute manière appropriée et peut comporter par exemple, une source lumineuse ponctuelle ou un réseau de diodes électroluminescentes pilotées en allumage/ extinction.

Le dispositif **1** comporte un système de pilotage du faisceau ponctuel de lumière de manière à éclairer successivement plusieurs zones de l'interface. En particulier, le système de pilotage du faisceau ponctuel de lumière comporte un système de déplacement du système de production du faisceau ponctuel de lumière de manière à pouvoir illuminer des zones différentes de l'interface **7.**

Selon une autre variante de réalisation, le système de production **8** comporte un réseau de diodes électroluminescentes réparties spatialement et qui sont pilotées sélectivement en allumage/extinction de manière à éclairer plusieurs zones différentes de l'interface **7.**

Le dispositif **1** selon l'invention comporte également un système de mesure **10** des valeurs d'une grandeur photoélectrique délivrées lors de l'éclairage afin de créer une matrice des valeurs de la grandeur photoélectrique. Comme cela sera expliqué en détail dans la suite de la description, le transducteur photoélectrique **2** permet de générer, lors de l'illumination de l'interface **7**, une grandeur photoélectrique qui est soit un photocourant soit une phototension. Le système **10** mesure ainsi, lors de chaque éclairage d'une zone de l'interface **7**, la valeur de la grandeur photoélectrique. Cette valeur de la grandeur photoélectrique est dépendante des conditions d'éclairage (c'est-à-dire par exemple de la durée de l'éclairage, de l'intensité, de la longueur d'onde et de la fréquence de modulation de la source lumineuse et de la taille de la zone de l'interface **7)** et des propriétés électroniques de l'interface **7** (c'est-à dire par exemple de la concentration et de la nature des dopants du substrat semi-conducteur **4,** de l'énergie de sa bande interdite, de la courbure des bandes électroniques du substrat semi-conducteur **4** à l'interface **7,** du potentiel des bandes plates du substrat semi-conducteur **4** et de la vitesse de recombinaison des porteurs de charges photogénérées à l'interface **7).**

Selon une variante préférée de réalisation, le système **10** enregistre également les valeurs mesurées de la grandeur photoélectrique afin de créer une matrice de valeurs correspondant aux valeurs de la grandeur photoélectrique, mesurées pour les différentes zones de l'interface **7** illuminées successivement dans le temps. Le système de mesure **10** comporte à cet effet, des moyens d'enregistrement de tous types connus en soi.

La dimension de cette matrice de valeurs dépend du nombre de zones illuminées et/ou du nombre des paramètres extérieurs définis et contrôlés lors de la réalisation de ces mesures, par exemple, le temps, la température, les conditions d'éclairage, le champ électrique, etc. Par exemple, dans le cas de l'éclairage d'une seule zone et en maintenant constant les paramètres extérieurs de mesure, la matrice comporte une seule valeur. Dans le cas de l'éclairage de n zones de l'interface **7** réparties selon une direction de l'interface **7** et en maintenant constants les paramètres extérieures de mesure, il est obtenu une matrice monodimensionnelle. Dans le cas de l'éclairage successif de n zones de interface **7** réparties en lignes et en colonnes (avec n supérieur à 1) et en maintenant constants les paramètres extérieurs de mesure, la matrice des n valeurs est de dimension 2.

Le dispositif **1** selon l'invention comporte également un système **12** de traitement des valeurs de la grandeur photoélectrique délivrées par le système de mesure **10**, adapté pour déterminer, à partir de la matrice, une empreinte ou une signature électronique caractéristique du milieu fluide. En d'autres termes, le système de traitement **12** permet de caractériser le milieu fluide à partir des valeurs de la grandeur photoélectrique mesurées.

Le système de traitement **12** met en oeuvre diverses méthodes pour caractériser le milieu fluide à partir des valeurs de la grandeur photoélectrique mesurées. Une méthode simplifiée consiste à caractériser le milieu fluide directement à partir des valeurs mesurées de la grandeur photoélectrique. Selon une variante avantageuse de réalisation, les valeurs mesurées de la grandeur photoélectrique sont représentées sous la forme d'une image. Selon cette variante, la matrice des valeurs de la grandeur photoélectrique est convertie ou représentée sous la forme d'une image visuelle comportant une ou plusieurs couleurs avec éventuellement des nuances dans les couleurs. Ainsi, le domaine de variation des valeurs de la grandeur photoélectrique est découpée en plages à chacune desquelles une couleur ou nuance de couleur est attribuée de sorte qu'à partir d'une matrice de valeurs à deux dimensions est obtenue une image en couleurs correspondante également à 2 dimensions.

La **Fig. 2A** est un exemple d'une image obtenue à partir d'une matrice des valeurs de la grandeur photoélectrique, mesurées pour l'air en tant que milieu fluide. Les zones les plus claires de l'image correspondent aux plus grandes des valeurs de la matrice. Les **Fig. 2B** et **2C** donnent des exemples d'images obtenues à partir de matrices des valeurs mesurées respectivement pour l'eau et l'alcool en tant que milieu fluide.

La suite de la description donnera d'autres exemples permettant d'illustrer l'objet de l'invention qui est mis en oeuvre essentiellement selon deux modes de réalisation.

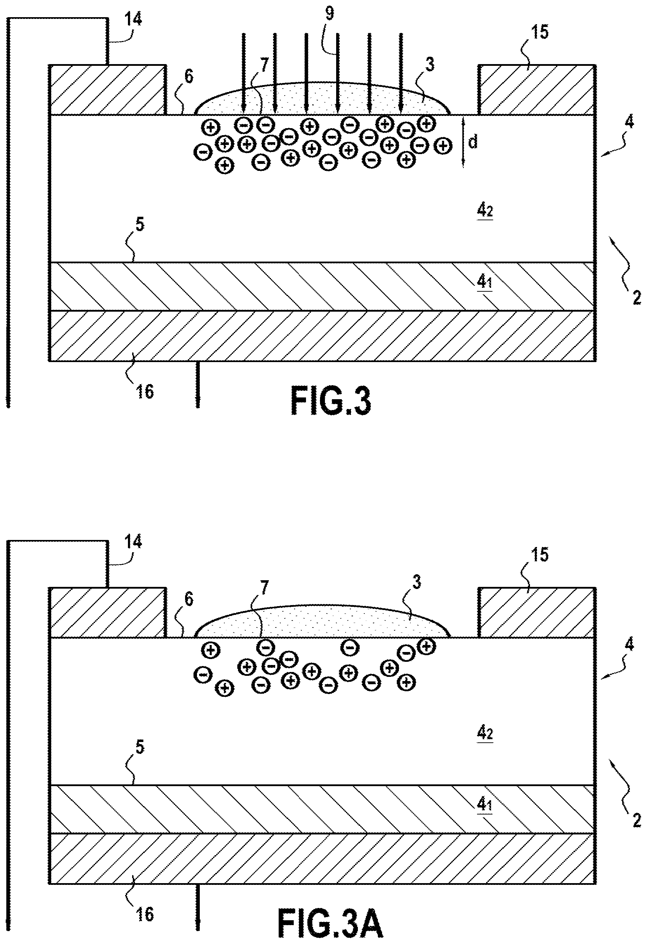

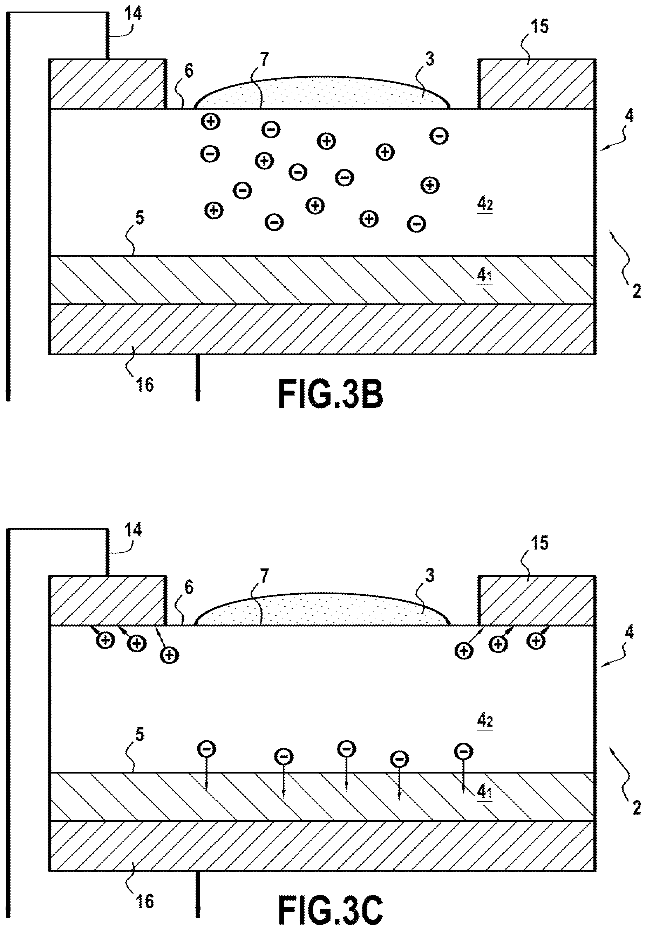

La **Fig. 3** illustre un premier mode de réalisation d'un transducteur photoélectrique **2** dont le substrat semi-conducteur **4₁, 4₂** possède au moins une zone de charge d'espace **5** réalisée par une jonction de type diode. Dans l'exemple illustré à la **Fig. 3****,** la zone de charge d'espace **5** est réalisée par une jonction p-n. A cet effet, le substrat semi-conducteur **4** possède par exemple une couche **4₁** de silicium de type n en contact avec une couche **4₂** de silicium de type p. Selon ce premier mode de réalisation, la grandeur photoélectrique mesurée est, par exemple, un photocourant.

Les **Fig.** 3, **3A****,** **3B, 3C** permettent d'illustrer le mécanisme d'apparition d'un photocourant à partir de la création de charges électriques photogénérées.

Comme illustré à la **Fig. 3****,** un milieu fluide est mis en contact avec la surface **6** du substrat semi-conducteur et plus précisément la couche **4₂** de silicium de type p afin de réaliser l'interface **7** substrat/milieu fluide. L'éclairage à travers le milieu fluide **3** d'une zone de l'interface **7** pendant un temps déterminé conduit à la création à l'intérieur de la couche **4₂** de silicium de type p et à partir de interface **7,** de charges électriques (électrons e- et trous +). Il est à noter que la profondeur de génération d dépend en particulier de la longueur d'onde du faisceau de lumière **9** et de la nature physico-chimique de la couche semi-conducteur **4₂.**

Après l'apparition des charges électriques à l'intérieur de la couche **4₂** de silicium de type p, il se produit inévitablement comme illustré à la **Fig. 3A****,** une recombinaison d'une partie des charges électriques photogénérées. Cette recombinaison est fonction de la qualité et de la nature électronique de la surface de réception **6.** Cette recombinaison d'une partie des charges électriques photogénérées est caractérisée par sa vitesse de recombinaison.

Les charges électriques photogénérées non recombinées se diffusent à l'intérieur de la couche **4₂** de silicium de type p, pendant leur durée de vie (**Fig. 3B**). La durée de vie des charges électriques photogénérées non recombinées dépend de la qualité et de la nature électronique de la couche **4₂** de silicium de type p.

Les charges électriques photogénérées diffusées à l'intérieur de la couche **4₂** de silicium de type p sont ensuite séparées par le champ de la jonction p-n en vue d'être récupérées par un circuit externe de récupération **14** faisant partie du système de mesure **10** (**Fig. 3C****).** Le circuit de récupération externe **14** permet de capter les photocourants traversant la jonction de type diode et obtenus à partir des charges électriques photogénérées dont la quantité est déterminée par la vitesse de recombinaison à l'interface **7** substrat/milieu fluide.

Il ressort du principe décrit ci-dessus que la valeur mesurée du photocourant à la suite de l'éclairage de l'interface **7,** est définie directement par la vitesse de recombinaison des charges électriques photogénérées. Il existe ainsi une corrélation directe et unique entre les caractéristiques de la zone de l'interface **7** éclairée et la valeur de photocourant mesurée par le circuit externe **14.** Il peut être obtenu une sensibilité de mesure élevée avec un large domaine de valeurs pour les photocourants mesurés dans la mesure où la vitesse de recombinaison peut varier de plusieurs ordres de grandeurs (par exemple, de 10² à 10⁶ cm/s).

La résolution spatiale de mesure, qui est responsable de la qualité de la reconnaissance ou de la caractérisation du milieu fluide et définissant la valeur minimal de la surface de réception **6,** dépend de la taille du spot lumineux c'est-à-dire de la surface de la zone éclairée de l'interface **7.** La résolution spatiale de mesure dépend également du déplacement minimal de ce spot lumineux pour lequel une variation de photocourant est détectée. En d'autres termes, la résolution spatiale dépend du degré d'hétérogénéité de la vitesse de recombinaison à la surface de réception **6.**

Selon un aspect de l'invention, il apparait avantageux de caractériser un milieu fluide en éclairant successivement plusieurs zones différentes de l'interface **7** qui présente naturellement ou à la suite d'un traitement spécifique, des vitesses de recombinaison différentes. En effet, il a été constaté que l'interface **7** présente naturellement des vitesses de recombinaison différentes se répartissant sur la surface de cette interface **7.** Bien entendu, il peut être envisagé un traitement, par exemple, chimique de la surface de réception **6** pour obtenir des vitesses de recombinaison différentes, distribuées sélectivement sur la surface de réception **6.** Par exemple, comme traitement chimique de la surface de réception du substrat, il peut être envisagé les traitements suivants :
- oxydation, nitridation, carbonisation, porosification du substrat initial,
- dépôt des couches d'oxydes, de nitrides, de carbides ou diverses couches poreuses à la surface du substrat,
- greffages chimiques des groupements fonctionnels organiques par hydrosilylation (par exemple, surface fraîche de Si),
- greffages chimiques des groupements fonctionnels organiques par silanisation (par exemple, surface oxydée ou nitridée de Si),
- greffages électrochimiques des groupements fonctionnels organiques,
- greffage des groupements fonctionnels organiques avec des alcooles ou amines,
- reconstruction consécutives de la surface du substrat avec des groupements fonctionnels organiques,
- remplissage des pores des couches poreuses formées par polymères, nanoparticules (en carbones, semi-conducteurs ou métaux), liquides faiblement polaires insolubles dans l'eau,
- croissances à l'intérieur des pores ou à la surface du substrat des couches ou membranes sensibles aux ions et des solutions ionophores dans les polymères.

La présence de vitesses de recombinaison différentes à l'interface **7** permet de créer une matrice des valeurs de photocourants récupérés par le circuit externe **14.**

Dans l'exemple illustré à la **Fig. 3****,** le circuit externe **14** comporte une première électrode **15** située sur la face du substrat semi-conducteur formant l'interface **7** et une deuxième électrode **16** réalisée sur la face du substrat semi-conducteur opposée de celle formant l'interface **7.** En d'autres termes, la première électrode **15** est située sur la face du substrat semi-conducteur recevant le milieu fluide **3.** Ces première et deuxième électrodes **15**, **16** conductrices électriquement sont réalisées par les techniques classiques de microélectroniques.

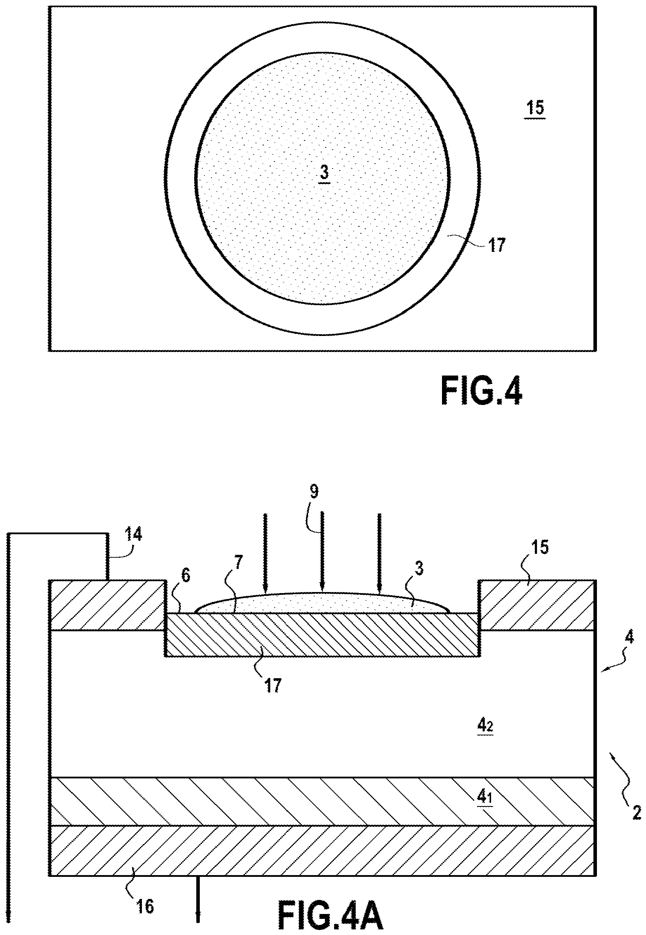

Les **Fig. 4** et **4A** illustrent une variante de réalisation de ce premier mode de réalisation dans laquelle la première électrode **15** entoure la surface de réception **6** du milieu fluide qui correspond à la surface supérieure d'une couche **17** de traitement chimique réalisée dans la couche **4₂** de silicium de type p. Comme expliqué ci-dessus, un tel traitement chimique pour réaliser la couche **17** qui reçoit le milieu fluide **3,** permet d'obtenir des vitesses de recombinaison différentes et réparties de manière hétérogène à la surface de réception **6.**

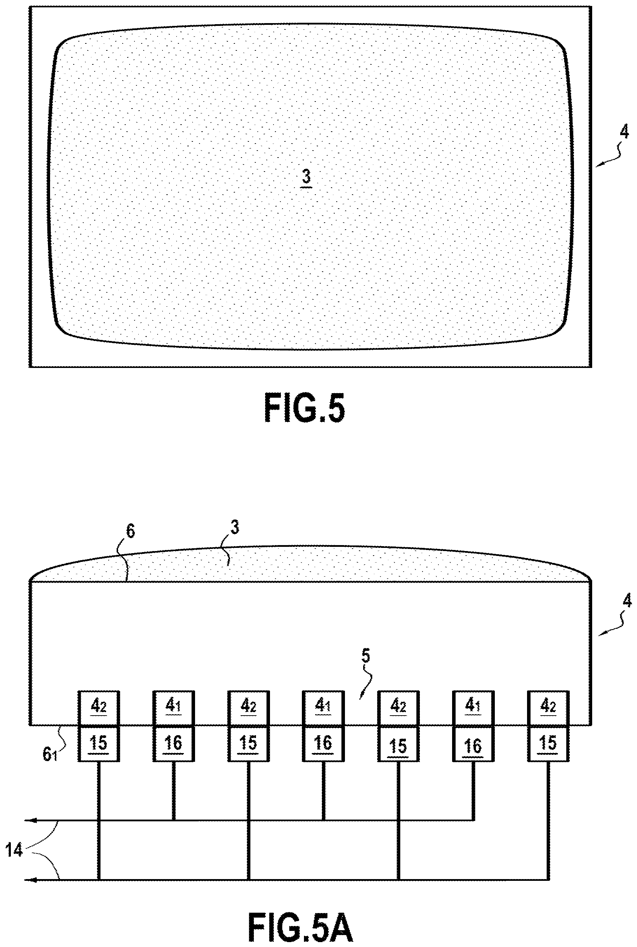

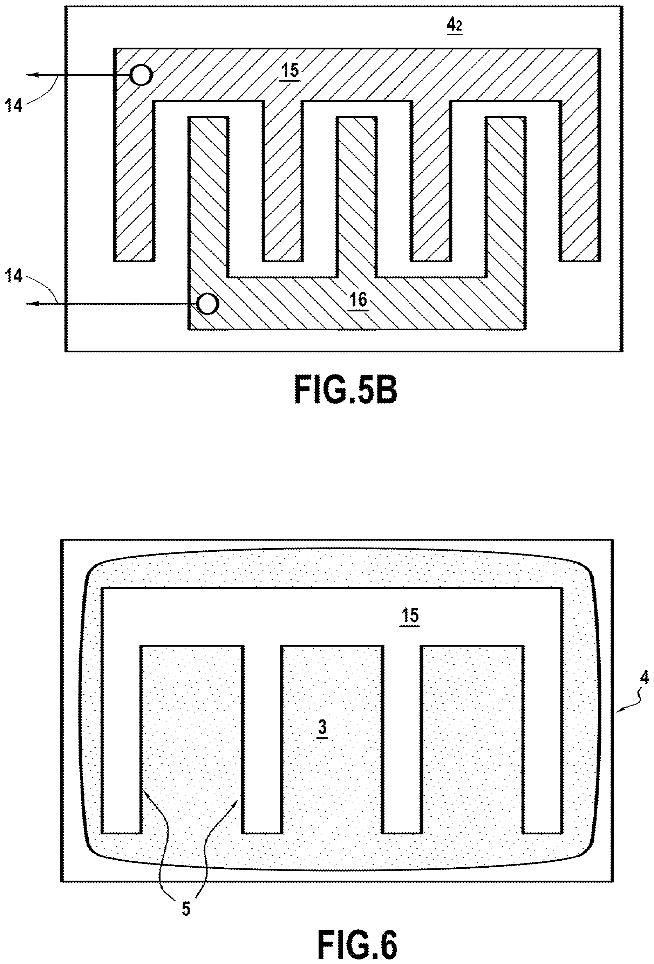

Les **Fig**. **5, 5A** et **5B** illustrent une variante de réalisation de ce premier mode de réalisation dans laquelle les première et deuxième électrodes **15, 16** du circuit externe **14** sont réalisées sur la face du substrat semi-conducteur opposée de celle formant l'interface **7.** Selon cette variante de réalisation, le transducteur photoélectrique. **2** comporte un substrat semi-conducteur **4** de type P dont la face supérieure **6** forme la surface de réception du milieu fluide. Le substrat semi-conducteur possède une zone de charge d'espace **5** réalisée par une jonction diode de type p-n aménagée à partir de la face inférieure **6₁** du substrat semi-conducteur. A cet effet, le substrat semi-conducteur **4** de type P possède à partir de sa face inférieure **6₁,** par exemple une couche **4₁** de silicium de type N séparée d'une couche **4₂** de silicium de type P+. Selon l'exemple de réalisation apparaissant plus précisément à la **Fig. 5B****,** les couches **4₁, 4₂** sont réalisées sous la forme de peignes entrecroisés.

La couche **4₁** de silicium de type N et la couche **4₂** de silicium de type P+ sont en contact respectivement avec une première et une deuxième électrodes **15, 16** conductrices électriquement faisant partie du circuit externe **14.** Le circuit externe **14** récupère le photocourant généré selon le principe expliqué ci-dessus.

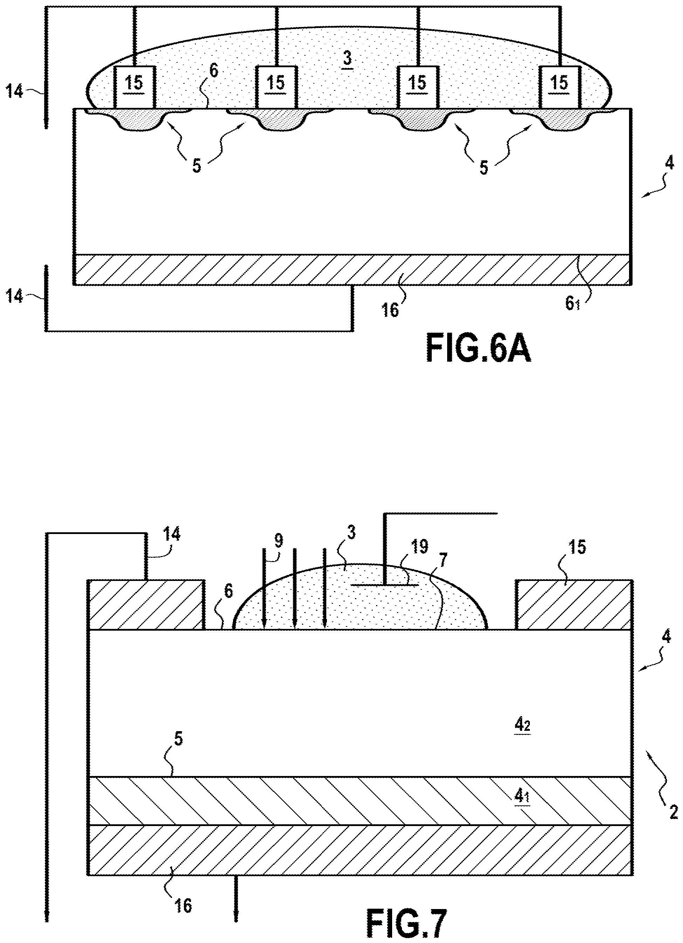

Les **Fig. 6** et **6A** illustrent une autre variante de réalisation de ce premier mode de réalisation dans laquelle le substrat semi-conducteur **4** possède une zone de charge d'espace **5** réalisée par une jonction diode de type métal-semi-conducteur. Selon cette variante de réalisation, le transducteur photoélectrique. **2** comporte un substrat semi-conducteur de type P dont la face supérieure **6** forme la surface de réception du milieu fluide **3.** Le substrat semi-conducteur **4** possède une zone de charge d'espace **5** réalisée par une jonction diode de type métal-semi-conducteur ou contact Schottky. Tel que cela ressort des **Fig. 6** et **6A**, une couche **15** d'un matériau conducteur électrique est déposée localement sur la face supérieure **6** de manière à former en regard à l'intérieur du substrat semi-conducteur **4** et à partir de cette face supérieure **6,** une zone de charge d'espace **5.** Dans l'exemple illustré, la couche du matériau conducteur électrique **15** est déposée pour présenter une forme de peigne dont les diverses parties sont en contact avec le milieu fluide.

La couche du matériau conducteur électrique **15** forme la première électrode du circuit externe **14** tandis que la deuxième électrode **16** est réalisée par une couche de matériau conducteur électrique déposée sur la face inférieure **6₁** du substrat semi-conducteur. Le circuit externe **14** récupère le photocourant généré selon le principe expliqué ci-dessus.

Les diverses variantes de réalisation décrites ci-dessus repose sur l'utilisation des jonctions de type diode spécialement créées dans le substrat semi-conducteur **4** et elles permettent de créer des charges électriques photogénérées conduisant à la récupération de photocourants à l'aide du circuit externe **14**. Il peut ensuite être créé une matrice de photocourants en vue de déterminer la signature électronique du milieu fluide.

Selon une variante de réalisation, il est prévu de créer des matrices de photocourants pour différentes valeurs d'une tension de polarisation du milieu fluide. La **Fig. 7** illustre un exemple de mise en oeuvre de cette variante de réalisation pour le mode de réalisation du transducteur illustré à la **Fig. 3****.** Bien entendu, cette variante de réalisation peut être mise en oeuvre pour l'une et/ou l'autre des variantes de réalisation illustrées aux **Fig. 4** à **6****.** Tel que cela ressort de la **Fig. 7****,** une première électrode de polarisation **19** est placée en contact avec le milieu fluide **3.** Cette électrode de polarisation **19** est placée en dehors du flux lumineux 9 ou elle est fabriquée dans un matériau optiquement transparent qui se trouve déposée sur une plaque optiquement transparente en contact avec le milieu fluide. La tension de polarisation est appliquée entre cette première électrode de polarisation **19** et une deuxième électrode de polarisation qui est rapportée ou avantageusement est réalisée par la première ou la deuxième électrode **15, 16** du circuit externe **14.**

Une tension de polarisation à une valeur déterminée est appliquée pendant l'éclairage de plusieurs zones de l'interface **7** intervenant successivement dans le temps permettant la récupération des photocourants et la création d'une matrice de photocourants. La valeur de la tension de polarisation est changée et une nouvelle séquence d'éclairage de interface **7** permet la récupération des photocourants et la création d'une nouvelle matrice de photocourants obtenue avec une tension de polarisation différente. La réalisation de plusieurs matrices bidimensionnelles de photocourants avec des tensions de polarisation différentes permet d'améliorer nettement la qualité de la reconnaissance ou de la caractérisation du milieu fluide.

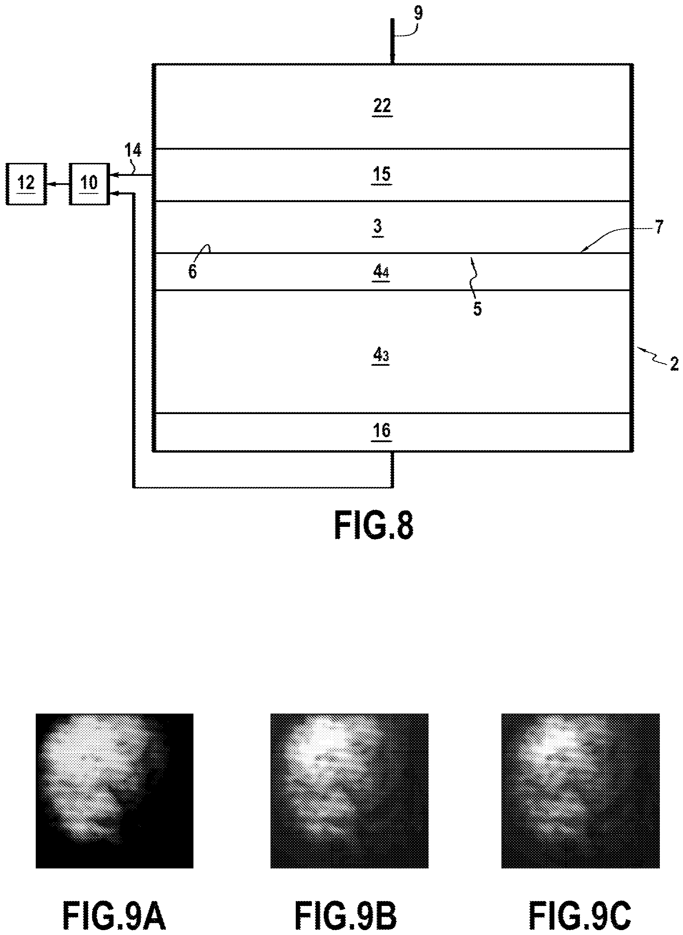

La **Fig. 8** illustre un deuxième mode de réalisation du dispositif selon l'invention dans lequel on utilise la zone de charge d'espace **5** existant naturellement à la surface du semi-conducteur et la grandeur photoélectrique mesurée peut être, par exemple, une phototension. Selon ce deuxième mode de réalisation, le transducteur photoélectrique **2** comporte un substrat semi-conducteur **4₃** possédant au moins une zone de charge d'espace **5** existant à l'interface **7** substrat/milieu fluide **3.** A cet effet, le substrat semi-conducteur **4₃** peut posséder une couche de surface **4₄** dont la partie supérieure sert de surface de réception **6** pour le milieu fluide **3.** Par exemple, la couche de surface **4₄** peut être réalisée par une couche poreuse de silicium ou par toute autre couche chimiquement active. Le milieu fluide **3** est en contact avec une première électrode **15** optiquement transparente adaptée pour autoriser le passage du faisceau de lumière. Cette première électrode **15** est revêtue par une plaque de protection optiquement transparente **22.** Cette première électrode **15** fait partie du circuit de récupération **14** de la phototension qui comporte une deuxième électrode **16** en contact électrique avec la face du substrat semi-conducteur **4₃** opposée à l'interface **7.**

Lorsqu'une zone de l'interface **7** est éclairée à travers le milieu fluide, des charges électriques photogénérées apparaissent dans le substrat semi-conducteur **4₃** et sont tout de suite séparées par le champ électrique existant dans la zone de charge d'espace **5** existant naturellement à la surface du semi-conducteur, ce qui conduit à l'apparition d'une phototension mesurée à l'aide des première et deuxième électrodes **15, 16** du circuit de récupération **14.** Le circuit de mesure **10** permet de créer, comme expliqué ci-dessus, une matrice des valeurs de phototension récupérées lors de l'éclairage des différentes zones de l'interface **7.** Le système de traitement **12** permet de caractériser le milieu fluide **3** à partir des valeurs de la phototension mesurées.

Il ressort de la description qui précède que le dispositif **1** selon l'invention permet de caractériser ou d'identifier un milieu fluide à partir des valeurs de la grandeur photoélectrique mesurées (photocourant ou phototension) qui sont caractéristiques dudit milieu fluide.

Il est à noter que selon une variante avantageuse de réalisation, le système de mesure **10** réalise des mesures simultanées des valeurs de photocourant et de phototension entre les électrodes afin de composer des matrices à plusieurs dimensions pour établir une signature électronique caractéristique du milieu fluide. La méthode pour identifier un milieu fluide découle directement de la description qui précède.

Le procédé selon l'invention consiste ainsi :
- à réaliser une surface de réception **6** pour le milieu fluide **3** sur au moins une face du transducteur photoélectrique **2** possèdant au moins une zone de charge d'espace **5,**
- à mettre le milieu fluide **3** à caractériser en contact avec la surface de réception **6**, afin de réaliser une interface **7** substrat/milieu fluide,
- à éclairer à travers le milieu fluide, successivement dans le temps, plusieurs zones de l'interface **7** à l'aide d'un faisceau de lumière modulé en amplitude pour créer des charges électriques photogénérées,
- à récupérer, lors de la séquence d'éclairage visant à éclairer successivement dans le temps, plusieurs zones de l'interface **7,** les valeurs d'au moins une grandeur photoélectrique dont la valeur est dépendante des conditions d'éclairage et des propriétés électroniques de l'interface **7** substrat/milieu fluide,
- à créer au moins une matrice mono ou bidimensionnelle des valeurs de la grandeur photoélectrique récupérée,
- et à partir de la matrice des valeurs de la grandeur photoélectrique créée, déterminer une signature électronique caractéristique du milieu fluide.

Il doit être compris que le procédé selon l'invention permet d'identifier un milieu fluide à partir de la matrice des valeurs des grandeurs photoélectriques récupérées, formant une signature électronique unique pour chaque milieu fluide. Bien entendu, pour augmenter la qualité de détection, le procédé de détection consiste à renouveler les étapes d'éclairage, de récupération de la grandeur photoélectrique, de création de la matrice et de détermination de la signature électronique, soit en maintenant les divers paramètres expérimentaux soit en modifiant par exemple l'un et/ou l'autre des paramètres suivants : temps d'application de l'éclairage, l'intensité de l'éclairage, la surface de l'éclairage, la longueur d'onde de l'éclairage, la température du milieu fluide et/ou du transducteur, de l'application d'une tension électrique complémentaire sur le transducteur.

De préférence, cette signature électronique est convertie en une image visuelle. L'identification du milieu fluide à partir d'une ou de plusieurs images peut être réalisée à l'oeil nu, par comparaison à une signature électronique de référence déterminée pour un milieu fluide connu ou à l'aide de divers traitements d'images et en particulier en utilisant des méthodes quantitatives de traitement des images obtenus.

Les **Fig. 9A** à **9C** illustrent la qualité de reproductibilité des mesures obtenues par l'invention. Les **Fig. 9A** à **9C** montrent un exemple des images obtenues lors de la répétition de la méthode selon l'invention pour caractériser un milieu fluide à savoir l'Iso-propanol dans l'exemple considéré. Les trois images obtenues à la suite des trois mesures de caractérisation de l'Iso-popanol, conformément à la technique décrite ci-dessus présentent des similitudes montrant la bonne reproductibilité des mesures effectuées.

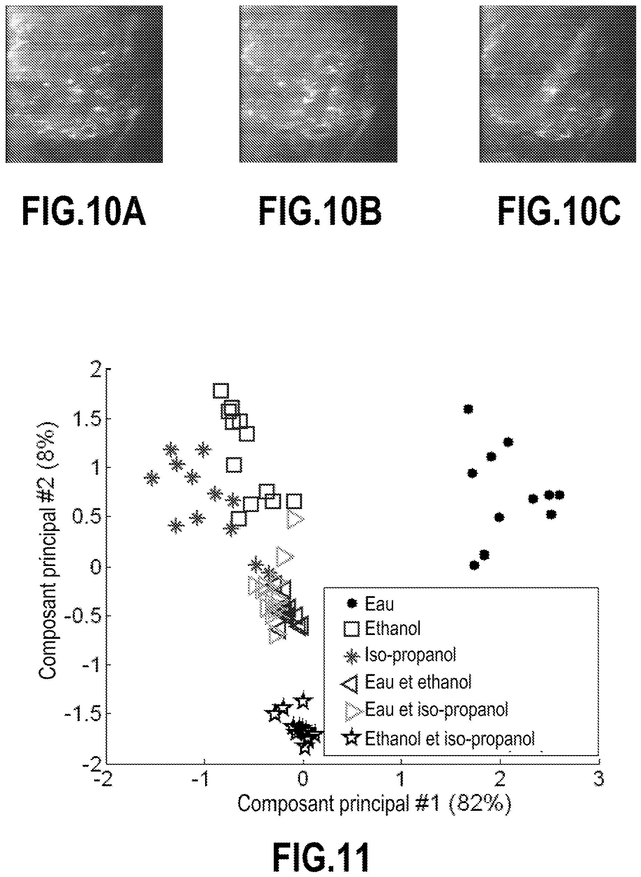

Les **Fig. 10A** à **10C** montrent les images d'un milieu fluide, en l'occurrence du cognac, appartenant à une même classe mais relevant de trois marques commerciales différentes. Il apparaît possible de visualiser sur ces images, les signatures spécifiques des produits liquides relevant de la même catégorie mais qui diffèrent par rapport à leur goût. Une corrélation entre les images et les goûts peut être établie à partir d'une analyse des images.

Pour permettre une reconnaissance des images rigoureuse et en particulier quantitative, le procédé selon l'invention peut mettre en oeuvre un protocole mathématique spécifique connu dans la littérature comme méthode des composants principaux. La **Fig. 11** illustre un exemple de cette analyse réalisée pour des liquides différents et de leurs mélanges (eau, éthanol, iso-propanol). Plus les liquides sont différents, plus les points qui leur correspondent s'éloignent. Il est à noter que même pour des mélanges très semblables, il est possible de reconnaître les espaces de rassemblement de points bien distincts.

L'invention n'est pas limitée aux exemples décrits et représentés car diverses modifications peuvent y être apportées sans sortir de son cadre.

## Revendications

1. Procédé pour caractériser un milieu fluide **(3)** à l'aide d'un transducteur photoélectrique **(2)** comportant au moins un substrat semi-conducteur **(4)** possédant au moins une zone de charge d'espace **(5) caractérisé en ce qu'**il comporte les étapes suivantes :
- réaliser une surface de réception **(6)** pour le milieu fluide **(3)** sur au moins une face du transducteur photoélectrique **(2),**
- mettre le milieu fluide à caractériser en contact avec la surface de réception **(6),** afin de réaliser une interface **(7)** substrat/milieu fluide,
- éclairer à travers le milieu fluide **(3),** successivement dans le temps, plusieurs zones de l'interface **(7)** à l'aide d'un faisceau de lumière **(9)** modulé en amplitude pour créer des charges électriques photogénérées,
- récupérer pour chaque zone de l'Interface **(7)** éclairée, les valeurs d'au moins une grandeur photoélectrique dont la valeur est dépendante des conditions d'éclairage et des propriétés électroniques de l'interface **(7)** substrat/milieu fluide,
- créer au moins une matrice mono ou bidimensionnelle des valeurs de la grandeur photoélectrique récupérée,
- à partir de la matrice des valeurs de la grandeur photoélectrique créée, déterminer une signature électronique caractéristique du milieu fluide.

2. Procédé selon la revendication 1, **caractérisé en ce qu'**il consiste à caractériser le milieu fluide (**3**) à l'aide d'un transducteur photoélectrique **(2)** dont le substrat semi-conducteur **(4)** possède au moins une zone de charge d'espace **(5)** spécialement créée dans le substrat semi-conducteur à partir d'une jonction de type diode:
- en créant des charges électriques photogénérées qui se diffusent vers la jonction de type diode, lors de l'éclairement à travers le milieu fluide,
- en récupérant les photocourants traversant la jonction de type diode et obtenus à partir des charges électriques photogénérées dont la quantité est déterminée par la vitesse de recombinaison à l'interface **(7)** substrat/milieu fluide,
- en créant une matrice des valeurs de photocourants récupérés,
- en déterminant la signature électronique caractéristique du milieu fluide à partir de la matrice des photocourant créée.

3. Procédé selon la revendication 1, **caractérisé en ce qu'**il consiste à caractériser le milieu fluide **(3)** à l'aide d'un transducteur photoélectrique **(2)** dont le substrat semi-conducteur **(4)** présente une zone de charge d'espace **(5)** existant naturellement à la surface du semi-conducteur à l'interface **(7)** substrat/ milieu fluide, le substrat étant équipé d'une première électrode **(15)** en contact avec le milieu fluide et d'une deuxième électrode (**16**) assurant le contact électrique sur la face du substrat opposée à l'interface (**7**),
- en récupérant la phototension par des mesures capacitives réalisées à l'aide des premières et deuxièmes électrodes **(15), (16),**
- en créant une matrice des valeurs de phototensions récupérées,
- en déterminant la signature électronique caractéristique du milieu fluide à partir de la matrice des phototensions créées.

4. Procédé selon l'une des revendications 1 à 3, **caractérisé en ce qu'**il consiste à renouveler les étapes d'éclairage, de récupération de la grandeur photoélectrique, de création de la matrice et de détermination de la signature électronique, en modifiant l'un et/ou l'autre des paramètres suivants : temps d'application de l'éclairage, l'intensité de l'éclairage, la surface de l'éclairage, la longueur d'onde de l'éclairage, la température du milieu fluide et/ou du transducteur, de l'application d'une tension électrique complémentaire sur le transducteur.

5. Procédé selon la revendication 1, **caractérisé en ce qu'**il consiste à déterminer en tant que signature électronique caractéristique du milieu fluide, au moins une image visuelle des valeurs des grandeurs photoélectriques récupérées.

6. Procédé selon l'une des revendications 1 à 5, **caractérisé en ce qu'**il consiste à découper le domaine de variation de la grandeur photoélectrique en plages à chacune desquelles une couleur est attribuée de manière que la signature électronique soit une image en couleurs.

7. Procédé selon la revendication 1, **caractérisé en ce qu'**il consiste à éclairer la zone de l'interface (**7**) par un flux lumineux (**9**) provenant soit d'un seul faisceau de lumière qui se déplace relativement de manière discrète ou continue par rapport au transducteur soit d'au moins une diode appartenant à un réseau de diodes commandées sélectivement en éclairage/extinction.

8. Procédé selon la revendication 1 à 7, **caractérisé en ce qu'**il comporte une étape d'analyse de la signature électronique afin de reconnaitre le milieu fluide et/ou l'un ou plusieurs de ses composants élémentaires.

9. Procédé selon la revendication 8, **caractérisé en ce que** l'étape d'analyse consiste à comparer la signature électronique du milieu fluide à au moins une signature électronique de référence déterminée pour un milieu fluide connu.

10. Procédé selon l'une des revendications 5 ou 6, **caractérisé en ce qu'**il comporte une étape d'analyse de la signature électronique consistant à utiliser des méthodes quantitatives de traitement des images obtenues.

11. Procédé selon l'une des revendications précédentes, **caractérisé en ce qu'**il consiste à réaliser une étape de traitement sur la surface de réception préalablement à la réalisation de l'étape d'éclairage.

12. Dispositif pour caractériser un milieu fluide (**3**) à l'aide d'un transducteur photoélectrique (**2**) **caractérisé en ce qu'**il comporte :
- au moins un substrat semiconducteur (**4**) possédant au moins une zone de charge d'espace (**5**) et présentant une surface de réception (**6**) pour le milieu fluide en vue de constituer une interface (**7**) substrat/milieu fluide,
- un système de production (**8**) d'un faisceau ponctuel de lumière (**9**) modulé en amplitude et éclairant, à travers le milieu fluide (**3**), au moins une zone de l'interface (**7**),
- un système de pilotage du faisceau ponctuel de lumière de manière à éclairer successivement plusieurs zones de l'interface (**7**),
- un système de mesure (**10**) des valeurs d'une grandeur photoélectrique délivrées lors de l'éclairage afin de créer une matrice mono ou bidimensionnelle des valeurs de la grandeur photoélectrique et,
- un système de traitement (**12**) des valeurs de la grandeur photoélectrique délivrées par le système de mesure (**10**), adapté pour assurer l'enregistrement des valeurs de la grandeur photoélectrique pour chacune des zones de l'interface (**7**) éclairée et pour déterminer, à partir de la matrice, une signature électronique caractéristique du milieu fluide.

13. Dispositif selon la revendication 12, **caractérisé en ce que** le système de production (**8**) d'un faisceau ponctuel de lumière comporte soit une source lumineuse ponctuelle associée éventuellement à un système de déplacement du système de production du faisceau ponctuel de lumière soit un réseau de diodes électroluminescentes pilotées chacune en allumage/ extinction.

14. Dispositif selon la revendication 12, **caractérisé en ce que** le système de mesure (**10**) des valeurs de la grandeur photoélectrique comporte un circuit de récupération externe (**14**) comportant :
- soit une première électrode (**15**) placée sur face du substrat semi-conducteur (**4**) formant l'interface (**7**) et une deuxième électrode (**16**) placée sur la face opposée du substrat semi-conducteur (**4**),
- soit une première électrode (**15**) et une deuxième électrode (**16**) placées sur la face du substrat semi-conducteur (**4**) opposée de celle formant l'interface (**7**),
- soit une première électrode (**15**) optiquement transparente qui se trouve en contact avec le milieu fluide d'un côté et à l'opposé avec une plaque de protection optiquement transparente (**22**) et une deuxième électrode (**16**) placée sur la face du substrat semi-conducteur (**4**) opposée de celle formant l'interface (**7**).

15. Dispositif selon la revendication 14, **caractérisé en ce que** le système de mesure (**10**) comporte aussi une électrode (**19**) optiquement transparente, en contact avec le milieu fluide (**3**) et assurant l'application d'une tension entre la dite électrode et une électrode placée sur la face du substrat semi-conducteur (**4**) opposée de celle formant l'interface (**7**) de manière à créer des matrices de valeurs de photocourants pour différentes valeurs de la tension appliquée entre les électrodes.

16. Dispositif selon la revendication 14, **caractérisé en ce que** les électrodes de mesure (**15, 16**) aménagées sur la face du substrat semi-conducteur (**4**) opposée de celle formant l'interface (**7**) sont réalisées sous la forme de peignes entrecroisés.

17. Dispositif selon l'une des revendications 12 à 16, **caractérisé en ce que** le système de mesure (**10**) réalise des mesures simultanées des valeurs de photocourant et phototension entre les électrodes afin de composer des matrices à plusieurs dimensions pour établir une signature électronique caractéristique du milieu fluide.

## Patentansprüche

1. Verfahren zur Charakterisierung eines fluiden Mittels (3) mit Hilfe eines photoelektrischen Wandlers (2), umfassend mindestens ein Halbleitersubstrat (4), das mindestens eine Raumladezone (5) besitzt, **dadurch gekennzeichnet, dass** es die folgenden Schritte umfasst:
- Herstellen einer Aufnahmefläche (6) für das fluide Mittel (3) auf mindestens einer Seite des photoelektrischen Wandlers (2),
- Inkontaktbringen des zu charakterisierenden fluiden Mittels mit der Aufnahmefläche (6), um eine Schnittstelle (7) Substrat/fluides Mittel zu schaffen,
- durch das fluide Mittel (3) in zeitlicher Abfolge Beleuchten mehrerer Zonen der Schnittstelle (7) mit Hilfe eines amplitudenmodulierten Lichtstrahls (9), um photogenerierte elektrische Ladungen zu erzeugen,
- für jede Zone der beleuchteten Schnittstelle (7), Erfassung der Werte mindestens einer photoelektrischen Größe, deren Wert von den Beleuchtungsbedingungen und den elektronischen Eigenschaften der Schnittstelle (7) Substrat/fluides Mittel abhängt,
- Erzeugung mindestens einer ein- oder zweidimensionalen Matrix der Werte der erfassten photoelektrischen Größe,
- auf Basis der Matrix der Werte der erzeugten photoelektrischen Größe, Bestimmung einer für das fluide Mittel charakteristischen elektronischen Signatur.

2. Verfahren gemäß Anspruch 1, **dadurch gekennzeichnet, dass** es darin besteht, das fluide Mittel (3) mit Hilfe eines photoelektrischen Wandlers (2) zu charakterisieren, dessen Halbleitersubstrat (4) mindestens eine Raumladezone (5) besitzt, die speziell im Halbleitersubstrat aus einer Verbindung vom Diodentyp erzeugt wird:
- wobei photogenerierte elektrische Ladungen erzeugt werden, die sich zu der Verbindung vom Diodentyp bei der Beleuchtung durch das fluide Mittel verbreiten,
- wobei die Photoströme erfasst werden, die die Verbindung vom Diodentyp durchqueren und aus den photogenerierten elektrischen Ladungen erhalten werden, deren Menge durch die Rekombinationsgeschwindigkeit an der Schnittstelle (7) Substrat/fluides Mittel bestimmt wird,
- wobei eine Matrix der erfassten Photostromwerte erzeugt wird,
- wobei die charakteristische elektronische Signatur des fluiden Mittels aus der erzeugten Matrix der Photoströme bestimmt wird.

3. Verfahren gemäß Anspruch 1, **dadurch gekennzeichnet, dass** es darin besteht, das fluide Mittel (3) mit Hilfe eines photoelektrischen Wandlers (2) zu charakterisieren, dessen Halbleitersubstrat (4) eine Raumladezone (5) aufweist, die auf natürliche Weise an der Oberfläche des Halbleiters an der Schnittstelle (7) Substrat/fluides Mittel vorhanden ist, wobei das Substrat mit einer ersten Elektrode (15), die mit dem fluiden Mittel in Kontakt ist, und einer zweiten Elektrode (16), die den elektrischen Kontakt auf der Fläche des zur Schnittstelle (7) entgegengesetzt angeordneten Substrats gewährleistet, ausgestattet ist,
- wobei die Photospannung durch kapazitive Messungen erfasst wird, die mit Hilfe der ersten und zweiten Elektroden (15), (16) durchgeführt werden,
- wobei eine Matrix der erfassten Werte von Photospannungen erzeugt wird,
- wobei die für das fluide Mittel charakteristische elektronische Signatur auf Basis der erzeugten Matrix der Photospannungen bestimmt wird.

4. Verfahren gemäß einem der Ansprüche 1 bis 3, **dadurch gekennzeichnet, dass** es darin besteht, die Schritte der Beleuchtung, Erfassung der photoelektrischen Größe, der Erzeugung der Matrix und der Bestimmung der elektronischen Signatur zu erneuern, wobei der eine und/oder der andere der folgenden Parameter verändert wird: Zeit der Anwendung der Beleuchtung, Stärke der Beleuchtung, Fläche der Beleuchtung, Wellenlänge der Beleuchtung, Temperatur des fluiden Mittels und/oder des Wandlers, Anwendung einer komplementären elektrischen Spannung am Wandler.

5. Verfahren gemäß Anspruch 1, **dadurch gekennzeichnet, dass** es darin besteht, als für das fluide Mittel charakteristische elektronische Signatur mindestens ein visuelles Bild der Werte der erfassten photoelektrischen Größen zu bestimmen.

6. Verfahren gemäß einem der Ansprüche 1 bis 5, **dadurch gekennzeichnet, dass** es darin besteht, den Variationsbereich der photoelektrischen Größe in Bereiche zu unterteilen, denen jeweils eine Farbe zugewiesen wird, so dass die elektronische Signatur ein Bild in Farben ist.

7. Verfahren gemäß Anspruch 1, **dadurch gekennzeichnet, dass** es darin besteht, die Zone der Schnittstelle (7) durch einen Lichtstrom (9) zu beleuchten, der entweder von einem einzigen Lichtstrahl kommt, der sich relativ diskret oder kontinuierlich in Bezug zum Wandler bewegt, oder von mindestens einer Diode, die einem Netz von Dioden angehört, die selektiv ein-/ausgeschaltet werden.

8. Verfahren gemäß Anspruch 1 bis 7, **dadurch gekennzeichnet, dass** es einen Schritt der Analyse der elektronischen Signatur umfasst, um das fluide Medium und/oder eine oder mehrere ihrer elementaren Komponenten zu erkennen.

9. Verfahren gemäß Anspruch 8, **dadurch gekennzeichnet, dass** der Analyseschritt darin besteht, die elektronische Signatur des fluiden Mittels mit mindestens einer bestimmten elektronischen Referenzsignatur für ein bekanntes fluides Mittel zu vergleichen.

10. Verfahren gemäß einem der Ansprüche 5 oder 6, **dadurch gekennzeichnet, dass** es einen Schritt der Analyse der elektronischen Signatur umfasst, der darin besteht, quantitative Bearbeitungsmethoden der erhaltenen Bilder zu verwenden.

11. Verfahren gemäß einem der vorhergehenden Ansprüche, **dadurch gekennzeichnet, dass** es darin besteht, einen Schritt der Behandlung der Aufnahmefläche vor der Durchführung des Beleuchtungsschrittes durchzuführen.

12. Vorrichtung zur Charakterisierung eines fluiden Mittels (3) mit Hilfe eines photoelektrischen Wandlers (2), **dadurch gekennzeichnet, dass** sie umfasst:
- mindestens ein Halbleitersubstrat (4), das mindestens eine Raumladezone (5) besitzt und eine Aufnahmefläche (6) für das fluide Mittel aufweist, um eine Schnittstelle (7) Substrat/fluides Mittel zu bilden,
- ein System zur Erzeugung (8) eines punktuellen amplitudenmodulierten Lichtstrahls (9), der durch das fluide Mittel (3) mindestens eine Zone der Schnittstelle (7) beleuchtet,
- ein System zur Steuerung des punktuellen Lichtstrahls, um nacheinander mehrere Zonen der Schnittstelle (7) zu beleuchten,
- ein System zum Messen (10) der Werte einer photoelektrischen Größe, die bei der Beleuchtung geliefert werden, um eine ein- oder zweidimensionale Matrix der Werte der photoelektrischen Größe zu erzeugen, und
- ein System zur Bearbeitung (12) der Werte der photoelektrischen Größe, die von dem Messsystem (10) geliefert werden, das dazu vorgesehen ist, die Aufzeichnung der Werte der photoelektrischen Größe für jede der Zonen der beleuchteten Schnittstelle (7) zu gewährleisten und auf Basis der Matrix eine für das fluide Mittel charakteristische elektronische Signatur zu bestimmen.

13. Vorrichtung gemäß Anspruch 12, **dadurch gekennzeichnet, dass** das System zur Erzeugung (8) eines punktuellen Lichtstrahls entweder eine punktuelle Lichtquelle, die eventuell einem System zur Verschiebung des Systems zur Erzeugung des punktuellen Lichtstrahls zugeordnet ist, oder ein Netz von Leuchtdioden umfasst, die jeweils ein-/ausgeschaltet werden.

14. Vorrichtung gemäß Anspruch 12, **dadurch gekennzeichnet, dass** das System zum Messen (10) der Werte der photoelektrischen Größe eine externe Erfassungsschaltung (14) umfasst, umfassend:
- entweder eine erste Elektrode (15), die auf der Seite des Halbleitersubstrats (4) angeordnet ist, die die Schnittstelle (7) bildet, und eine zweite Elektrode (16), die auf der zum Halbleitersubstrat (4) entgegengesetzt angeordneten Seite vorgesehen ist,
- oder eine erste Elektrode (15) und eine zweite Elektrode (16), die auf der Seite des Halbleitersubstrats (4) angeordnet ist, die zu jener, die die Schnittstelle (7) bildet, entgegengesetzt angeordnet ist,
- oder eine erste optisch transparente Elektrode (15), die sich mit dem fluiden Mittel auf einer Seite und gegenüber mit einer optisch transparenten Schutzplatte (22) in Kontakt befindet, und eine zweite Elektrode (16), die auf der Seite des Halbleitersubstrats (4) vorgesehen ist, die zu der die Schnittstelle (7) bildenden Seite entgegengesetzt angeordnet ist.

15. Vorrichtung gemäß Anspruch 14, **dadurch gekennzeichnet, dass** das Messsystem (10) auch eine optisch transparente Elektrode (19) umfasst, die mit dem fluiden Mittel (3) in Kontakt ist und das Anlegen einer Spannung zwischen der Elektrode und einer Elektrode gewährleistet, die auf der Seite des Halbleitersubstrats (4) vorgesehen ist, die zu der die Schnittstelle (7) bildenden Seite entgegengesetzt angeordnet ist, um Matrizes von Photostromwerten für verschiedene Werte der zwischen den Elektroden angelegten Spannung zu erzeugen.

16. Vorrichtung gemäß Anspruch 14, **dadurch gekennzeichnet, dass** die Messelektroden (15, 16), die auf der Seite des Halbleitersubstrats (4) vorgesehen sind, die zu der die Schnittstelle (7) bildenden Seite entgegengesetzt angeordnet ist, in Form von gekreuzten Kämmen vorgesehen sind.

17. Vorrichtung gemäß einem der Ansprüche 12 bis 16, **dadurch gekennzeichnet, dass** das Messsystem (10) gleichzeitige Messungen der Photostrom- und Photospannungswerte zwischen den Elektroden durchführt, um mehrdimensionale Matrizes zusammenzustellen, um eine für das fluide Mittel charakteristische elektronische Signatur zu erstellen.

## Claims

1. A method of characterizing a fluid medium (3) with the help of a photoelectric transducer (2) having at least one semiconductor substrate (4) possessing at least one space charge zone (5), the method being **characterized in that** it comprises the following steps:
• making a reception surface (6) for receiving the fluid medium (3) on at least one face of the photoelectric transducer (2);
• putting the fluid medium for characterizing into contact with the reception surface (6) so as to make an interface (7) between the substrate and the fluid medium;
• lighting a plurality of zones of the interface (7) successively in time through the fluid medium (3) with the help of an amplitude-modulated light beam (9) in order to create photogenerated electric charges;
• for each lighted zone of the interface (7), recovering the values of at least one photoelectric magnitude of value that depends on the lighting conditions and on the electronic properties of the interface (7) between the substrate and the fluid medium;
• creating at least one one- or two-dimensional matrix of values of the recovered photoelectric magnitude; and
• from the matrix that has been created of values of the photoelectric magnitude, determining an electronic signature that is characteristic of the fluid medium.

2. A method according to claim 1, **characterized in that** it consists in characterizing the fluid medium (3) with the help of a photoelectric transducer (2) in which the semiconductor substrate (4) possesses at least one space charge zone (5) that is specially created in the semiconductor substrate from a diode type junction:
• by creating photogenerated electric charges that diffuse towards the diode type junction on lighting through the fluid medium;
• by recovering the photocurrents passing through the diode type junction and obtained from photogenerated electric charges of quantity that is determined by the rate of recombination at the interface (7) between the substrate and the fluid medium;
• by creating a matrix of recovered photocurrent values; and
• by determining the electronic signature characteristic of the fluid medium from the created matrix of photocurrents.

3. A method according to claim 1, **characterized in that** it consists in characterizing the fluid medium (3) with the help of a photoelectric transducer (2) in which the semiconductor substrate (4) presents a space charge zone (5) that exists naturally at the surface of the semiconductor at the interface (7) between the substrate and the fluid medium, the substrate being provided with a first electrode (15) in contact with the fluid medium and with a second electrode (16) providing electrical contact with the face of the substrate that is opposite from the interface (7):
• by recovering the photovoltage by performing capacitive measurements with the help of the first and second electrodes (15, 16);
• by creating a matrix of recovered photovoltage values; and
• by determining the electronic signature characteristic of the fluid medium from the created matrix of photovoltages.

4. A method according to any one of claims 1 to 3, **characterized in that** it consists in renewing the steps of lighting, of recovering the photoelectric magnitude, of creating the matrix, and of determining the electronic signature by modifying one and/or more of the following parameters: the application time of the lighting; the intensity of the lighting; the area of the lighting; the wavelength of the lighting; the temperature of the fluid medium and/or of the transducer; and applying an additional electric voltage to the transducer.

5. A method according to claim 1, **characterized in that** it consists in determining at least one visual image of the recovered values of the photoelectric magnitudes as an electronic signature characteristic of the fluid medium.

6. A method according to any one of claims 1 to 5, **characterized in that** it consists in subdividing the field over which the photoelectric magnitude varies into areas, with a color being allocated to each of them so that the electronic signature is a color image.

7. A method according to claim 1, **characterized in that** it consists in lighting the interface zone (7) with light flux (9) coming either from a single light beam that moves relative to the transducer in discrete or continuous manner, or else from at least one LED forming part of an array of LEDs that are selectively switched on and off.

8. A method according to claim 1 to 7, **characterized in that** it includes a step of analyzing the electronic signature in order to recognize the fluid medium and/or one or more of its individual components.

9. A method according to claim 8, **characterized in that** the analysis step consists in comparing the electronic signature of the fluid medium with at least one reference electronic signature determined for a known fluid medium.

10. A method according to claim 5 or claim 6, **characterized in that** it includes a step of analyzing the electronic signature that consists in using quantitative methods of processing the images obtained.

11. A method according to any preceding claim, **characterized in that** it consists in performing a processing step on the reception surface prior to performing the lightning step.

12. A device for characterizing a fluid medium (3) with the help of a photoelectric transducer (2), the device being **characterized in that** it comprises:
• at least one semiconductor substrate (4) possessing at least one space charge zone (5) and presenting a reception surface (6) for receiving the fluid medium in order to constitute an interface (7) between the substrate and the fluid medium;
• a production system (8) for producing a spot light beam (9) that is amplitude-modulated and that lights at least one zone of the interface (7) through the fluid medium (3);
• a system for controlling the spot light beam so as to light a plurality of zones of the interface (7) in succession;
• a measurement system (10) for measuring values of a photoelectric magnitude delivered while performing the lighting so as to create a one- or two-dimensional matrix of values of the photoelectric magnitude; and
• a processor system (12) for processing values of the photoelectric magnitude delivered by the measurement system (10) and adapted to store the values of the photoelectric magnitude for each of the lighted zone of the interface (7) and, on the basis of the matrix, to determine an electronic signature characteristic of the fluid medium.

13. A device according to claim 12, **characterized in that** the production system (8) for producing a spot light beam comprises either a spot light source optionally associated with a system for moving the system for producing the spot light beam, or else an array of light-emitting diodes each subjected to on/off control.

14. A device according to claim 12, **characterized in that** the measurement system (10) for measuring the values of the photoelectric magnitude includes an external recovery circuit (14) comprising:
• either a first electrode (15) placed on the face of the semiconductor substrate (4) forming the interface (7) and a second electrode (16) placed on the opposite face of the semiconductor substrate (4);
• or a first electrode (15) and a second electrode (16) placed on the face of the semiconductor substrate (4) opposite from the face forming the interface (7);
• or else an optically transparent first electrode (15) in contact with the fluid medium on one side and in contact on its opposite side with an optically transparent protective plate (22), and a second electrode (16) placed on the face of the semiconductor substrate (4) that is opposite from the face forming the interface (7).

15. A device according to claim 14, **characterized in that** the measurement system (10) also includes an optically transparent electrode (19) in contact with the fluid medium (3) and serving to apply a voltage between said electrode and an electrode placed on the face of the semiconductor substrate (4) opposite from its face forming the interface (7) so as to create matrices of photocurrent values for different values of the voltage applied between the electrodes.

16. A device according to claim 14, **characterized in that** the measurement electrodes (15, 16) provided on the face of the semiconductor substrate (4) opposite from its face forming the interface (7) are made in the form of interleaved combs.

17. A device according to any one of claims 12 to 16, **characterized in that** the measurement system (10) performs simultaneous measurements of photocurrent values and of photovoltage values between the electrodes in order to make up pluri-dimensional matrices in order to establish a characteristic electronic signature of the fluid medium.
